# EUROPEAN PATENT SPECIFICATION

(11) **EP 3 458 236 B1**
(45) Date of publication and mention of the grant of the patent: **26.08.2020**
(21) Application number: 16736641.8
(22) Date of filing: 16.05.2016
(51) Int. Cl.: B25J 15/00, B25J 17/02, B25J 19/02, B25J 9/00, B25J 13/08, B25J 9/16

(54) **ARTIFICIAL HAND HAVING FINGER UNITS PROVIDED WITH A PHOTO COUPLER CONTACT FORCE SENSOR**
KÜNSTLICHE HAND MIT FINGEREINHEITEN MIT EINEM FOTOKOPPLER-KONTAKTKRAFTSENSOR
MAIN ARTIFICIELLE COMPORTANT DES UNITÉS DE DOIGT POURVUES D'UN CAPTEUR DE FORCE DE CONTACT À PHOTOCOUPLEUR

(43) Date of publication of application: 27.03.2019
(73) Proprietor: KOC Universitesi, 34450 Istanbul (TR)
(72) Inventor: LAZOGLU, Ismail, 34450 Sariyer/Istanbul (TR); SHAMS, Sarmad, 34450 Sariyer/Istanbul (TR)
(74) Representative: Atalay, Baris
(86) International application number: PCT/TR2016/050145
(87) International publication number: WO 2017/200495

(56) References cited:
- WO-A2-94/08208
- JP-A- 2004 020 368
- US-A- 3 904 234
- US-A1- 2009 302 626

## Description

### Technical Field of the Present Invention

The present invention generally concerns an artificial hand having finger units provided with a photo coupler contact force sensor to measure relative displacement around an articulation between associated parts.

### Prior Art/Background of the Present Invention

From any kind of assembly lines to surgical operations robotic hands have a colossal field of usage. Dexterity is one of the important features to have for a robotic hand. Dexterity gives a robotic hand to have a capability of changing the position and orientation of the manipulated object from a given reference configuration to a different one, arbitrarily chosen within the hand workspace. That briefly tells a robotic hand should be a mimic of a real human hand as good as it can be to operate well. Like other technologies, the technology of robotic hands has globally evolved as time passed by.

An artificial or prosthetic hand continuously interacts with the environment either grasping an object, carrying objects, reaching places that human beings cannot, so on and so forth. During the interaction, continuous monitoring of the feedback force is critical to perform delegate and sophisticated tasks like holding an egg, handshaking with a person or holding a paper cup with a volatile level of liquid. In all cases, it is required to apply a certain amount of force so that the egg will not collapse, hand will not be squeezed or paper cup will not fall and will have a condition so that liquid is drinkable. To monitor interaction force, a feedback or contact force sensor is required that detects the force by using different phenomenon e.g. piezoresistivity, conductive or inductive, piezoelectric and strain gauges.

A feedback or contact force is an essential parameter to monitor during the gripping of an object that allows the robotic or prosthetic hand to further increase or decrease the torque of the motor. In commercial prosthetic hands, force sensors are usually placed at the anterior side of the fingertip, that results in narrowing the detection angle/area of the force and hence required the specific portion of the tip to be in contact with the object to detect the contact or reaction force.

A prior art document in the field of the present invention can be referred to as EP0523031, disclosing a force sensor consisting of a hollow elastomer cushion in which there is disposed at least one device for optical detection of displacement comprising an infrared LED and a phototransistor which detects the displacement of a surface placed in front of it by measuring the intensity reflected from the surface. This force sensor is disposed directly on the finger of the robot, which allows direct and accurate information on the stress tensor relating to the stresses exerted on the finger of the robot to be obtained.

Documents US2009/302626A1, US3904234A, JP2004020368A and WO94/08208A2 form also part of the prior art.

### Objects of the Present Invention

Primary object of the present invention is to provide an improved contact force sensor comprising at least one photo coupler and at least one photo interrupter to sense a distal phalange via a Distal Inter-Phalangeal (DIP) joint just like human fingers.

The present invention provides a monitoring system to continuously measure and control the relative movement of phalangeal segments in an artificial hand that can be a robotic/prosthetic hand as defined in the characterized portion of Claim 1.

It is placed a flexural distal inter-phalangeal joint behind a phalange segment such that any rotational movement of said phalange segment will cause the deflection of said flexural distal inter-phalangeal joint, hence transmitting the true amount of force to the contact force sensor.

### Brief Description of the Figures of the Present Invention

Accompanying drawings are given solely for the purpose of exemplifying an artificial hand having finger units, whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

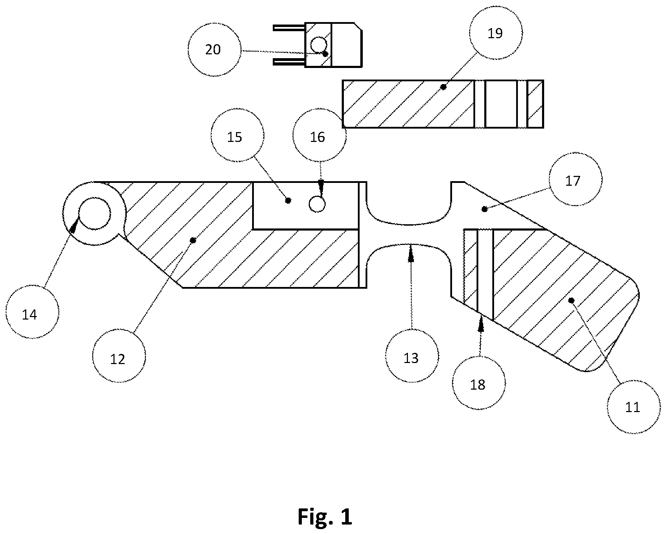

Fig. 1 demonstrates side view of an artificial finger with semi-rigid flexural distal inter-phalangeal joint according to one of the embodiments of the invention.

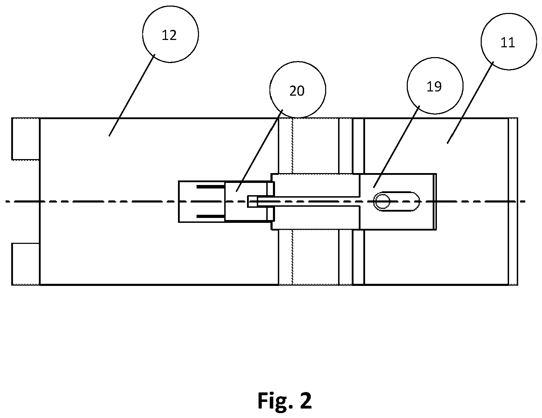

Fig. 2 demonstrates top view of photo coupler and photo interrupter pair according to the present invention.

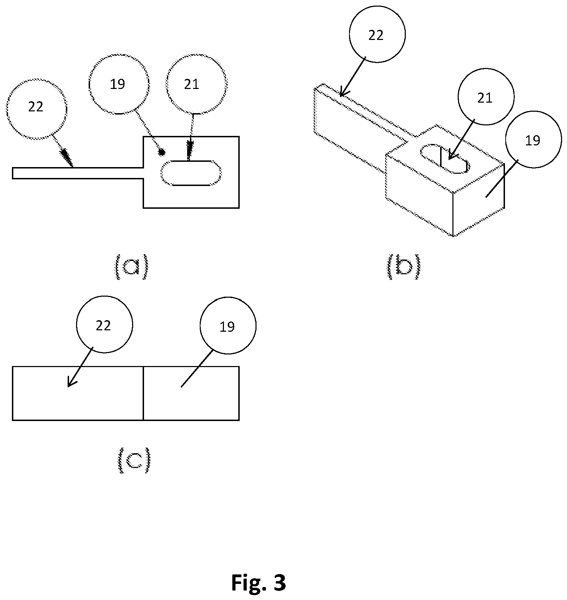

Fig. 3a demonstrates top view of a photo interrupter having a photo interrupter mounting channel and an integral beam blocker according to the present invention.
Fig. 3b demonstrates isometric view of the photo interrupter according to the present invention.
Fig. 3c demonstrates side view of the photo interrupter according to the present invention.

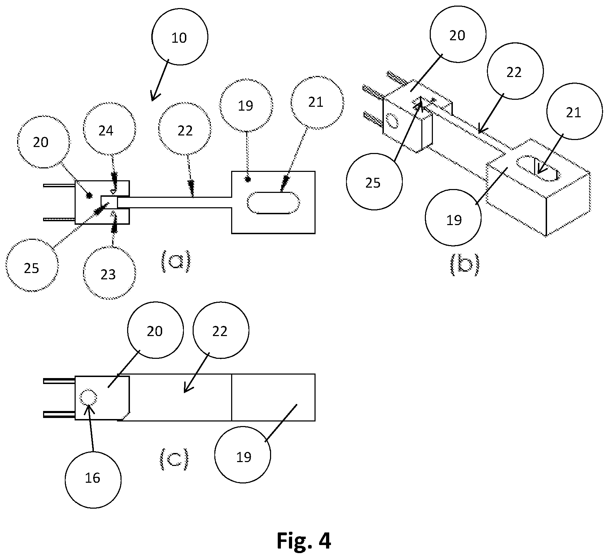

Fig. 4a demonstrates top view of the photo coupler and photo interrupter coupled thereto, having photo interrupter mounting channel, beam blocker, light source, light sensing unit and photo coupler channel according to the present invention.
Fig. 4b demonstrates isometric view of the photo coupler coupled with the photo interrupter according to the present invention.
Fig. 4c demonstrates side view of the photo coupler together with the photo interrupter according to the present invention.
Fig. 5 demonstrates an enlarged top view of the photo coupler together with the photo interrupter according to the present invention.

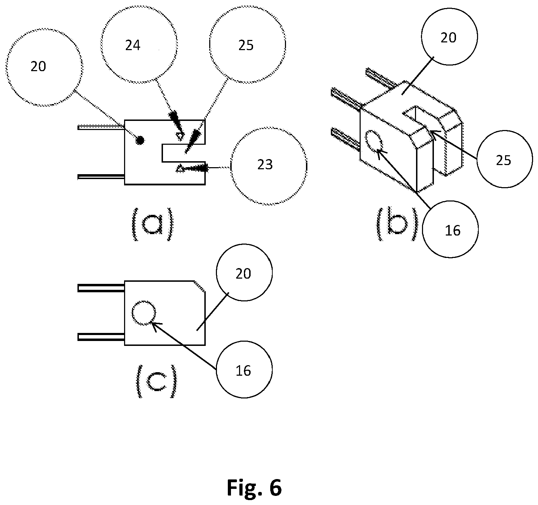

Fig. 6a demonstrates top view of the photo coupler having the light source, light sensing unit and photo coupler channel according to the present invention.
Fig. 6b demonstrates isometric view of the photo coupler according to the present invention.
Fig. 6c demonstrates side view of the photo coupler according to the present invention.

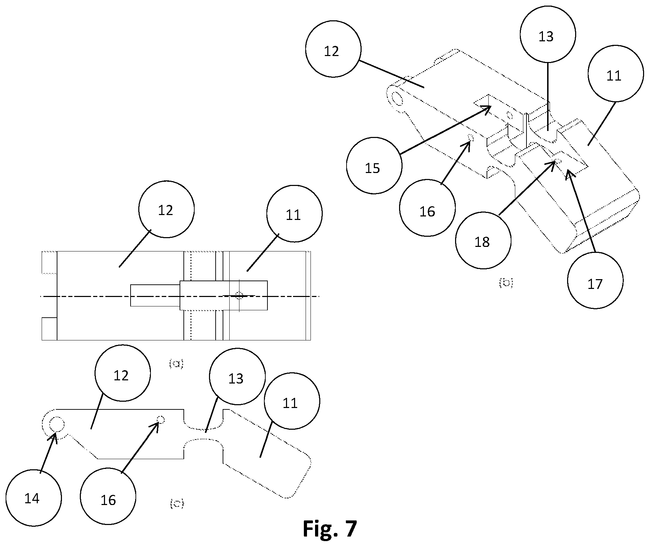

Fig. 7a demonstrates top view of a distal phalange segment connected with an intermediate phalange segment through the flexural distal inter-phalangeal joint. Fig. 7b and 7c respectively depict isometric and side views of the two segments according to the present invention.

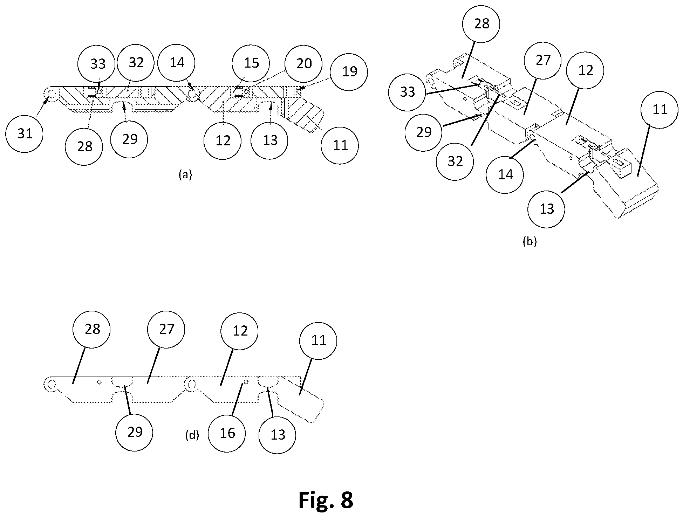

Fig. 8a, 8b, and 8c demonstrate a pair of segments in the form of a distal phalange segment connected with an intermediate phalange segment and an additional pair of an inner distal phalange segment connected with an inner intermediate phalange segment through a flexural linear inter-phalangeal joint.

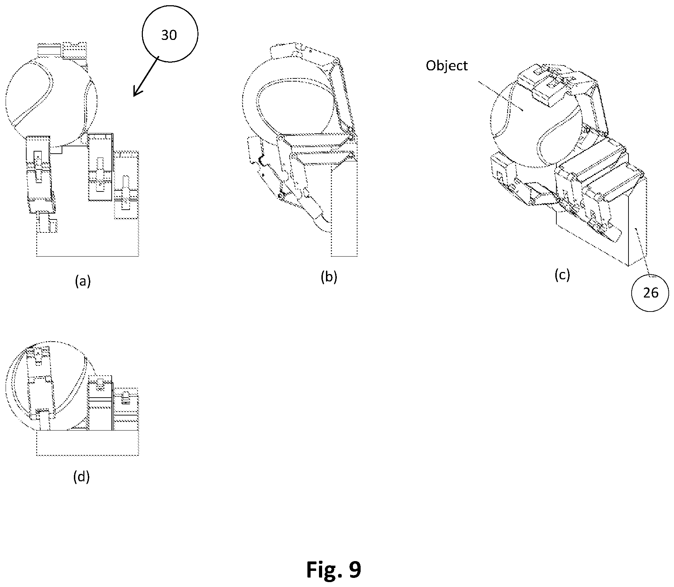

Fig. 9a, 9b, 9c and 9d demonstrate an artificial hand in different views; namely front, side, isometric and top view are shown according to the present invention.

### Detailed Description of the Present Invention

The following numerals are referred to in the detailed description of the present invention:
10) Contact force sensor
11) Distal phalange segment
12) Intermediate phalange segment
13) Flexural distal inter-phalangeal joint
14) Proximal inter-phalangeal joint
15) Photo coupler housing
16) Photo coupler mounting slot
17) Photo interrupter housing
18) Photo interrupter mounting slot
19) Photo interrupter
20) Photo coupler
21) Photo interrupter mounting channel
22) Beam blocker
23) Light source
24) Light sensing unit
25) Photo coupler channel
26) Finger root structure
27) Inner distal phalange segment
28) Inner intermediate phalange segment
29) Flexural linear inter-phalangeal joint
30) Artificial hand
31) Inner proximal phalangeal joint
32) Inner photo-interrupter
33) Inner photo-coupler

The present invention discloses an artificial hand (30) having a distal phalange segment (11), an intermediate phalange segment (12), a flexural distal inter-phalangeal joint (DIP joint) (13) and a proximal inter-phalangeal joint (14) designed in a way that they simulate functioning of a human hand fingers. The distal phalange segment (11) is connected to said intermediate phalange segment (12) through said flexural distal inter-phalangeal joint (13). The sensing elements that will be explained hereinafter detect the deflection of said semi-rigid flexural distal inter-phalangeal joint (13) caused by the force exerted on the outermost tip of the distal phalange segment (11).

The distal phalange segment (11) of the invention, which constitutes the outer tip of the artificial hand (30), comprises a photo interrupter housing (17) and a photo interrupter mounting slot (18). The photo interrupter housing (17) is occupied by the photo interrupter (19) placed therein and it is designed as a generally linear channel to partly enclose said photo interrupter (19). The photo interrupter housing's (17) photo interrupter mounting slot (18) is configured in the manner that the photo interrupter (19) is removably installed to be movable in a photo coupler channel (25). In a more specific manner, when the distal phalange segment (11) undergoes a rotational movement relative to said intermediate phalange segment (12) due to the flexibility of said flexural distal inter-phalangeal joint (13), said photo interrupter (19) is imparted a certain amount of movement in the direction of said photo coupler channel (25) as its distal end is fixedly attached to the distal phalange segment (11) within the photo interrupter housing (17).

The intermediate phalange segment (12) of the invention is connected to the distal phalange segment (11) through said flexural distal inter-phalangeal joint (13) and comprises a photo coupler housing (15) and a photo coupler mounting slot (16). The photo coupler housing (15) contains a photo coupler (20) to be fixedly placed therein. The photo coupler housing (15) acts as a channel maintaining said photo coupler (20). The photo coupler housing (15) further has photo coupler mounting slots (16) which serve to the purpose of fixating said photo coupler (20) within said photo coupler housing (15). The photo interrupter (19) and the photo coupler (20) together form the contact force sensor (10) of the present invention. The artificial hand (30) of the invention is therefore composed of the above-identified individual elements interacting with each other to create the reciprocally induced set of actions.

Basically, the photo coupler housing (15) is formed as a cavity on the intermediate phalange segment (12), preserving the photo coupler (20) while the photo interrupter housing (17) is created on the distal phalange segment (11) and in between the photo coupler (20) and photo interrupter (19) lies the semi rigid flexural distal inter-phalangeal joint (13) that bends with a certain rate "k" causing the photo-interrupter to deflect "θ" when a force "F" is exerted on the tip of the finger. So the net force can be calculated using Hook's law.

The force on the tip of the contact force sensor (10) causes the flexural distal inter-phalangeal joint (13) to bend in the direction of the force; therefore, resulting the photo interrupter (19) to move into said photo coupler channel (25), thereby blocking the light received from a light source (23) to reach the window of a light sensing unit (24), decreasing the output signal of the photo coupler (20). The light source (23) can typically be an LED while said light sensing unit (24) is a photo-transistor.

The photo interrupter (19) comprises a photo interrupter mounting channel (21) and a beam blocker (22). The photo interrupter mounting channel (21) typically allows fixation of the photo interrupter (19) into said photo interrupter housing (17) through any appropriate connection means such as screws. The beam blocker (22) is a longitudinal extension with a sufficiently thin transversal dimension to fit the photo coupler channel (25). It basically provides that, depending on its positionment on its longitudinal direction, some amount of the light is blocked from reaching the light sensing unit (24) when said beam blocker (22), movable in accordance with the flexibly supported rotational movement of the distal phalange segment (11), is introduced into said photo coupler channel (25). The photo interrupter mounting channel (21) allows to set the initial position of the photo interrupter (19) and thereby the calibrated amount of light reaching the light sensing unit (24) in no load conditions.

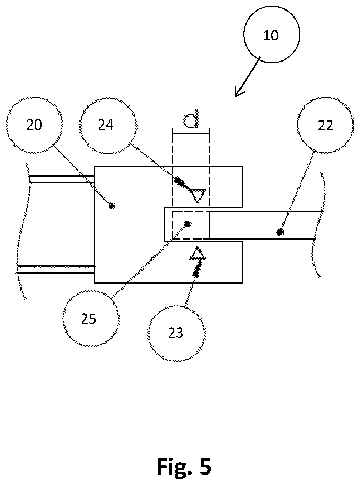

The light source (23) and the light sensing unit (24) are typically facing each other along the same direction. The photo interrupter (19) is adapted to be aligned for insertion into the photo coupler channel (25) of the photo coupler (20) in order to be displaced therein for effecting blockage of the light emitted by the light source (23). The beam blocker (22) being movable relative to the photo coupler channel (25), a substantially limited movement thereof will cause the blockage of the light. The distance "d" as shown by the dashed lines in Fig. 5 is representative of the amount of the tip portion's displacement as the maximum amount of blockage of the LED light from 0% to 100%. Therefore, an electronic control unit is able to calculate the exact amount of blockage in accordance with the final position of the tip portion.

In a variation of the present invention, an additional pair of an inner distal phalange segment (27) and an inner intermediate phalange segment (28) can be attached to each other via a flexural linear inter-phalangeal joint (29), this inner pair of cooperating elements being connected with the outer pair of said distal phalange segment (11) and said intermediate phalange segment (12) through the proximal inter-phalangeal joint (14). More precisely, the outer pair of finger segments in the robotic/artificial hand (30) is connected with an additional inner pair to provide a four-segment artificial hand (30) finger. Both pair of finger segments form a longitudinal artificial hand (30) finger attached to a finger root structure (26) from which, a plurality of separate fingers typically extend.

According to this embodiment of the present invention, a certain amount of rotational movement of the distal phalange segment (11) around said flexural distal inter-phalangeal joint (13) can cause linear displacement of an inner photo-interrupter (32) disposed between said inner distal phalange segment (27) and said inner intermediate phalange segment (28). It is to be noted that the pair of distal phalange segment-intermediate phalange segment (11-12) is connected to the pair of inner distal phalange segment-inner intermediate phalange segment (27-28) through the rotary proximal inter-phalangeal joint (14) and the latter will prevent transmission of any rotational movement to the inner pair of inner distal phalange segment-inner intermediate phalange segment (27-28). On the other hand, as the flexure means, namely the flexural linear inter-phalangeal joint (29) disposed between the inner pair components can undergo linear stretching in response to rotational movement of the distal phalange segment (11) beyond a predetermined level, the inner photo-interrupter (32) movable in and out relative to an inner photo-coupler's (33) respective channel receiving a respective beam blocker.

It is therefore to be noted that the stretching out of the flexural linear inter-phalangeal joint (29) extending linearly in longitudinal dimension is sensed by said inner photo-coupler's (33) cooperating with said inner photo-interrupter (33). The electronic control unit therefore uses the additional information, namely the positionment of the inner beam blocker relative to the inner photo coupler to be combined with the information obtained from the pair of photo interrupter-photo coupler (19-20) around said flexural distal inter-phalangeal joint (13). The additional stretching out of the flexural distal inter-phalangeal joint (13) signifies an even greater amount of contact force and is thereby construed as a direct indication for interrupting driving mechanisms (such as electric motors), typically effective in effectuating rotation of the finger segments around said proximal inter-phalangeal joints (14) and said inner proximal phalangeal joints (31).

In a nutshell, the present invention proposes an artificial hand (30) having a plurality of artificial finger, each artificial finger comprising a flexural distal inter-phalangeal joint (13) disposed between a distal phalange segment (11) and an intermediate phalange segment (12), said intermediate phalange segment (12) being connected with a proximal inter-phalangeal joint (14) around which said intermediate phalange segment (12) is rotatable to displace said distal phalange segment (11).

According to one embodiment of the present invention, a photo interrupter (19) having a beam blocker (22) longitudinally extends through the flexural distal inter-phalangeal joint (13) to a photo coupler channel (25) of a photo coupler (20), each of said photo interrupter (19) and said photo coupler (20) being respectively disposable at one longitudinal side of said flexural distal inter-phalangeal joint (13) either on the distal phalange segment (11) or the intermediate phalange segment (12).

According to a further embodiment of the present invention, said photo coupler (20) consists of a light source (23) and a light sensing unit (24) in optical communication with each other in the manner that optical communication between the light source (23) and the light sensing unit (24) is gradually interruptable in response to displacement of said beam blocker (22) within said photo coupler channel (25) upon rotational movement of said phalange segment (11) around said flexural distal inter-phalangeal joint (13).

According to a still further embodiment of the present invention, the distal phalange segment (11) comprises the photo interrupter (19) with the beam blocker (22) longitudinally extending from said distal phalange segment (11) through the flexural distal inter-phalangeal joint (13) to the photo coupler channel (25) of the photo coupler (20) of said intermediate phalange segment (12).

According to a yet still further embodiment of the present invention, the light source (23) and the light sensing unit (24) are in optical communication with each other along an axis perpendicular to the longitudinal direction of said beam blocker (22).

According to a yet still further embodiment of the present invention, said flexural distal inter-phalangeal joint (13) is configured such that the longitudinal axis of said distal phalange segment (11) is inclined with respect to said intermediate phalange segment (12) whereby rotational deflection of said flexural distal inter-phalangeal joint (13) caused by the force exerted on the outermost tip of the distal phalange segment (11) is detectable.

According to a yet still further embodiment of the present invention, the distal phalange segment (11) comprises a photo interrupter housing (17) for accommodating said photo interrupter (19).

According to a yet still further embodiment of the present invention, the photo interrupter (19) is fixedly attached to said photo interrupter housing (17) through a photo interrupter mounting slot (18) in the manner that rotation of the distal phalange segment (11) in the opposite direction against a contacted surface causes displacement of the photo interrupter's (19) beam blocker (22) relative to said photo coupler channel (25) due to the inclined orientation of said flexural distal inter-phalangeal joint (13) between the distal phalange segment (11) and the intermediate phalange segment (12).

According to a yet still further embodiment of the present invention, the intermediate phalange segment (12) comprises a photo coupler housing (15) in which said photo coupler (20) is fixedly attached.

According to a yet still further embodiment of the present invention, the light source (23) is an LED and said light sensing unit (24) is a photo-transistor.

According to a yet still further embodiment of the present invention, a second pair of an inner distal phalange segment (27) and an inner intermediate phalange segment (28) are attached to the first pair of said distal phalange segment (11) and said intermediate phalange segment (12) through the proximal inter-phalangeal joint (14).

According to a yet still further embodiment of the present invention, said pair of inner distal phalange segment (27) and inner intermediate phalange segment (28) are attached to each other via a flexural linear inter-phalangeal joint (29).

According to a yet still further embodiment of the present invention, said first and second pair of artificial finger segments form a longitudinal artificial hand (30) finger attached to a finger root structure (26) from which, a plurality of separate artificial fingers extend.

According to a yet still further embodiment of the present invention, linear stretching out of the flexural linear inter-phalangeal joint (29) between the inner distal phalange segment (27) and the inner intermediate phalange segment (28) is measurable through linear displacement of an inner photo-interrupter (32) relative to an inner photo-coupler (33).

According to a yet still further embodiment of the present invention, an electronic control unit concurrently measures rotational displacement of said Flexural distal inter-phalangeal joint and linear stretching out of said flexural linear inter-phalangeal joint (29).

A particular feature, structure, or characteristic described herein in connection with one embodiment may be implemented within other embodiments without departing from the scope of the invention. The dimensional aspects of the beam blocker (22) in different configurations depending on the design of the artificial hand (30). In addition, it is to be noted that the location or arrangement of individual elements within each disclosed embodiment may be modified without departing from the scope of the invention. The detailed description is, therefore, not to be taken in a limiting sense, and the scope of the present invention is defined only by the appended claims to be interpreted along with the full range of equivalents to which the claims are entitled.

## Claims

1. An artificial hand (30) having a plurality of artificial fingers, each artificial finger comprising a flexural distal inter-phalangeal joint (13) disposed between a distal phalange segment (11) and an intermediate phalange segment (12), said intermediate phalange segment (12) being connected with a proximal inter-phalangeal joint (14) around which said intermediate phalange segment (12) is rotatable to displace said distal phalange segment (11) **characterized in that;**
a photo interrupter (19) having a beam blocker (22) longitudinally extends through the flexural distal inter-phalangeal joint (13) to a photo coupler channel (25) of a photo coupler (20), each of said photo interrupter (19) and said photo coupler (20) being respectively disposable at one longitudinal side of said flexural distal inter-phalangeal joint (13) either on the distal phalange segment (11) or the intermediate phalange segment (12),
said photo coupler (20) consists of a light source (23) and a light sensing unit (24) in optical communication with each other in the manner that optical communication between the light source (23) and the light sensing unit (24) is gradually interruptable in response to displacement of said beam blocker (22) within said photo coupler channel (25) upon rotational movement of said phalange segment (11) around said flexural distal inter-phalangeal joint (13).

2. An artificial hand (30) as set forth in Claim 1, **characterized in that** the distal phalange segment (11) comprises the photo interrupter (19) with the beam blocker (22) longitudinally extending from said distal phalange segment (11) through the flexural distal inter-phalangeal joint (13) to the photo coupler channel (25) of the photo coupler (20) of said intermediate phalange segment (12).

3. An artificial hand (30) as set forth in Claim 2, **characterized in that** the light source (23) and the light sensing unit (24) are in optical communication with each other along an axis perpendicular to the longitudinal direction of said beam blocker (22).

4. An artificial hand (30) as set forth in Claim 2, **characterized in that** said flexural distal inter-phalangeal joint (13) is configured such that the longitudinal axis of said distal phalange segment (11) is inclined with respect to said intermediate phalange segment (12) whereby rotational deflection of said flexural distal inter-phalangeal joint (13) caused by the force exerted on the outermost tip of the distal phalange segment (11) is detectable.

5. An artificial hand (30) as set forth in Claim 2, **characterized in that** the distal phalange segment (11) comprises a photo interrupter housing (17) for accommodating said photo interrupter (19).

6. An artificial hand (30) as set forth in Claim 4, **characterized in that** the photo interrupter (19) is fixedly attached to said photo interrupter housing (17) through a photo interrupter mounting slot (18) in the manner that rotation of the distal phalange segment (11) in the opposite direction against a contacted surface causes displacement of the photo interrupter's (19) beam blocker (22) relative to said photo coupler channel (25).

7. An artificial hand (30) as set forth in Claim 2 or 6, **characterized in that** the intermediate phalange segment (12) comprises a photo coupler housing (15) in which said photo coupler (20) is fixedly attached.

8. An artificial hand (30) as set forth in any preceding Claim, **characterized in that** the light source (23) is an LED and said light sensing unit (24) is a photo-transistor.

9. An artificial hand (30) as set forth in any preceding Claim, **characterized in that** a second pair of an inner distal phalange segment (27) and an inner intermediate phalange segment (28) are attached to the first pair of said distal phalange segment (11) and said intermediate phalange segment (12) through the proximal inter-phalangeal joint (14).

10. An artificial hand (30) as set forth in Claim 9, **characterized in that** said pair of inner distal phalange segment (27) and inner intermediate phalange segment (28) are attached to each other via a flexural linear inter-phalangeal joint (29).

11. An artificial hand (30) as set forth in Claim 9 or 10, **characterized in that** said first and second pair of artificial finger segments form a longitudinal artificial hand (30) finger attached to a finger root structure (26) from which, a plurality of separate artificial fingers extend.

12. An artificial hand (30) as set forth in Claim 10, **characterized in that** linear stretching out of the flexural linear inter-phalangeal joint (29) between the inner distal phalange segment (27) and the inner intermediate phalange segment (28) is measurable through linear displacement of an inner photo-interrupter (32) relative to an inner photo-coupler (33).

13. An artificial hand (30) as set forth in Claim 12, **characterized in that** an electronic control unit concurrently measures rotational displacement of said Flexural distal inter-phalangeal joint and linear stretching out of said flexural linear inter-phalangeal joint (29).

## Patentansprüche

1. Künstliche Hand (30) mit mehreren künstlichen Fingern, wobei jeder künstliche Finger ein biegefähiges distales Interphalangealgelenk (13) aufweist, die zwischen einem distalen Phalangen-Segment (11) und einem intermediären Phalangen-Segment (12) angeordnet ist, dieses intermediäre Phalangen-Segment (12) mit einem proximalen Interphalangealgelenk (14) verbunden ist um die dieses intermediäre Phalangen-Segment (12) drehbar ist um dieses distale Phalangen-Segment (11) zu verlagern, **dadurch gekennzeichnet dass**; ein Foto-Unterbrecher (19) mit einem Strahlenblocker (22) sich in Längsrichtung durch das biegefähige distale Interphalangealgelenk (13) zu einem Optokoppler-Kanal (25) eines Optokopplers (20) erstreckt, jeder von diesem Foto-Unterbrecher (19) und diesem Optokoppler (20) jeweils an einer Längsseite dieses biegefähigen distalen Interphalangealgelenks (13) entweder am distalen Phalangen-Segment (11) oder am intermediären Phalangen-Segment (12) angeordnet sein kann, dieser Optokoppler (20) aus einer Lichtquelle (23) und einer Lichtsensoreinheit (24) besteht die miteinander so unter optische Kommunikation stehen dass die optische Kommunikation zwischen der Lichtquelle (23) und der Lichtsensoreinheit (24) als Reaktion auf die Verlagerung dieses Strahlenblockers (22) innerhalb dieses Optokoppler -Kanals (25) aufgrund der Drehbewegung dieses Phalangen-Segments (11) um dieses biegefähigen distalen Interphalangealgelenk (13) zeitweise unterbrechbar ist.

2. Künstliche Hand (30) gemäß Anspruch 1, **dadurch gekennzeichnet dass** das distale Phalangen-Segment (11) den Foto-Unterbrecher (19) mit dem Strahlenblocker (22) aufweist, der sich in Längsrichtung ab diesem distalen Phalangen Segment (11) durch das biegefähige distale Interphalangealgelenk (13) an den Optokoppler-Kanal (25) des Optokopplers (20) dieses intermediären Phalangen-Segments (12) erstreckt.

3. Künstliche Hand (30) gemäß Anspruch 2, **dadurch gekennzeichnet, dass** die Lichtquelle (23) und die Lichtsensoreinheit (24) entlang einer zur Längsrichtung dieses Strahlen-blockers (22) senkrechten Ache, miteinander unter optische Kommunikation stehen.

4. Künstliche Hand (30) gemäß Anspruch 2, **dadurch gekennzeichnet dass** dieses biegefähige distale Interphalangealgelenk (13) so gestaltet ist dass die Längsachse dieses distalen Phalangen-Segments (11) in Bezug auf dieses intermediäre Phalangen-Segment (12) geneigt ist, wodurch die durch die auf die äußerste Spitze des distalen Phalangen-Segments (11) ausgeübte Kraft herbeigeführte Abbiegung dieses biegefähigen distalen Interphalangealgelenks (13) erfassbar ist.

5. Künstliche Hand (30) gemäß Anspruch 2, **dadurch gekennzeichnet, dass** das distale Phalangen-Segment (11) ein Foto-Unterbrecher Gehäuse (17) aufweist um diesen Foto-Unterbrecher (19) aufzunehmen.

6. Künstliche Hand (30) gemäß Anspruch 4, **dadurch gekennzeichnet dass** der Foto-Unterbrecher (19) an dieses Foto-Unterbrecher Gehäuse (17) über eine Befestigungsnut (18) des Foto-Unterbrechers so festverbunden ist, dass eine Drehung des distalen Phalangen Segments (11) in der entgegengesetzten Richtung gegen eine berührte Fläche, die Verlagerung des Strahlenblockers (22) des Foto-Unterbrechers (19) in Bezug auf dieses Optokoppler-Kanal (25) verursacht.

7. Künstliche Hand (30) gemäß Anspruch 2 oder 6, **dadurch gekennzeichnet, dass** das intermediäre Phalangen-Segment (12) ein Optokoppler Gehäuse (15) aufweist, in welchem dieser Optokoppler (20) festverbunden ist.

8. Künstliche Hand (30) gemäß irgendeinem der vorhergehenden Ansprüche, **dadurch gekennzeichnet, dass** die Lichtquelle (23) ein LED ist und diese Lichtsensoreinheit (24) ein Fototransistor ist.

9. Künstliche Hand (30) gemäß irgendeinem der vorhergehenden Ansprüche, **dadurch gekennzeichnet dass** an das erste Paar aus diesem distalen Phalangen Segment (11) und diesem intermediären Phalangen Segment (12) über das proximale Interphalangealgelenk (14) ein zweites Paar aus einem inneren distalen Phalangen-Segment (27) und einem inneren intermediären Phalangen-Segment (28) verbunden ist.

10. Künstliche Hand (30) gemäß Anspruch 9, **dadurch gekennzeichnet, dass** dieses Paar aus dem inneren distalen Phalangen-Segment (27) und dem inneren intermediären Phalangen-Segment (28) aneinander über ein biegefähiges lineares Interphalangialgelenk (29) verbunden sind.

11. Künstliche Hand (30) gemäß Anspruch 9 oder 10, **dadurch gekennzeichnet dass** dieses erste und zweite Paar aus künstlichen Fingersegmenten einen länglichen Finger der künstlichen Hand (30) bilden, der an die Fingerwurzelgelenkstruktur (26) verbunden ist woraus sich mehrere separate künstliche Finger erstrecken.

12. Künstliche Hand (30) gemäß Anspruch 10, **dadurch gekennzeichnet dass** die lineare Ausdehnung des biegefähigen linearen Interphalangealgelenks (29) zwischen dem inneren distalen Phalangen-Segment (27) und dem inneren intermediären Phalangen-Segment (28) über die lineare Verlagerung eines inneren Foto-Unterbrechers (32) in Bezug auf einen inneren Optokoppler (33) messbar ist.

13. Künstliche Hand (30) gemäß Anspruch 12, **dadurch gekennzeichnet, dass** eine elektronische Kontrolleinheit die Drehverlagerung dieses biegefähigen distalen Interphalangealgelenks und die lineare Ausdehnung dieses biegefähigen linearen Interphalangealgelenks (29) gleichzeitig misst.

## Revendications

1. Main artificielle (30) ayant une pluralité de doigts artificiels, chaque doigt artificiel comprenant une articulation interphalangienne distale en flexion (13) agencée entre un segment distal de la phalange (11) et un segment intermédiaire de la phalange (12), ledit segment intermédiaire de la phalange (12) étant lié avec une articulation interphalangienne proximale (14), autour de laquelle ledit segment intermédiaire de la phalange (12) est rotatif pour déplacer ledit segment distal de la phalange (11), **caractérisée en ce qu'**un interrupteur photo (19) ayant un arrêt de faisceau (22) s'étend longitudinalement à travers l'articulation interphalangienne distale en flexion (13) jusqu'à un canal du coupleur photo (25) d'un coupleur photo (20), chacun dudit interrupteur photo (19) et dudit coupleur photo (20) étant apte à être agencé respectivement sur un côté longitudinal de ladite articulation interphalangienne distale en flexion (13) soit sur le segment distal de la phalange (11) ou soit sur le segment intermédiaire de la phalange (12), ledit coupleur photo (20) comportant une source lumineuse (23) et un capteur de lumière (24) en communication optique l'un avec l'autre de manière à ce que la communication optique entre la source lumineuse (23) et le capteur de lumière (24) soit graduellement interruptible en réponse au déplacement dudit arrêt de faisceau (22) dans ledit canal du coupleur photo (25) lors d'un mouvement de rotation dudit segment de la phalange (11) autour de ladite articulation interphalangienne distale en flexion (13).

2. Main artificielle (30) selon la revendication 1, **caractérisée en ce que** le segment distal de la phalange (11) comprend l'interrupteur photo (19) avec l'arrêt de faisceau (22) s'étendant longitudinalement depuis le segment distal de la phalange (11) à travers l'articulation interphalangienne distale en flexion (13) jusqu'au canal du coupleur photo (25) dudit coupleur photo (20) dudit segment intermédiaire de la phalange (12).

3. Main artificielle (30) selon la revendication 2, **caractérisée en ce que** la source lumineuse (23) et le capteur de lumière (24) sont en communication optique l'un avec l'autre le long d'un axe perpendiculaire à la direction longitudinale dudit arrêt de faisceau (22).

4. Main artificielle (30) selon la revendication 2, **caractérisée en ce que** ladite articulation interphalangienne distale en flexion (13) est configurée de manière telle que l'axe longitudinale dudit segment distal de la phalange (11) soit inclinée par rapport audit segment intermédiaire de la phalange (12) grâce à quoi la déflection rotative de ladite articulation interphalangienne distale en flexion (13) causée par la force exercée sur l'extrémité extrême du segment distal de la phalange (11) est détectable.

5. Main artificielle (30) selon la revendication 2, **caractérisée en ce que** le segment distal de la phalange (11) comprend un boitier (17) de l'interrupteur photo pour accommoder ledit interrupteur photo (19).

6. Main artificielle (30) selon la revendication 4, **caractérisée en ce que** l'interrupteur photo (19) est attaché de manière fixe audit boitier de l'interrupteur photo (17) par une fente de montage (18) de l'interrupteur photo de manière telle que la rotation du segment distal de la phalange (11) en sens opposé contre une surface contactée cause le déplacement de l'arrêt de faisceau (22) dudit interrupteur photo (19) par rapport audit canal du coupleur photo (25).

7. Main artificielle (30) selon la revendication 2 ou 6, **caractérisée en ce que** le segment intermédiaire de la phalange (12) comprend un boitier (15) du coupleur photo dans lequel ledit coupleur photo (20) est attaché de manière fixe.

8. Main artificielle (30) selon l'une quelconque des revendications précédentes, **caractérisée en ce que** la source lumineuse (23) est une LED et ledit capteur de lumière (24) est un phototransistor.

9. Main artificielle (30) selon l'une quelconque des revendications précédentes, **caractérisée en ce qu'**une seconde paire du segment distal interne de la phalange (27) et du segment intermédiaire interne de la phalange (28) est attachée à la première paire dudit segment distal de la phalange (11) et dudit segment intermédiaire de la phalange (12) par l'articulation interphalangienne proximale (14).

10. Main artificielle (30) selon la revendication 9, **caractérisée en ce que** les éléments de ladite paire du segment distal interne de la phalange (27) et du segment intermédiaire interne de la phalange (28) sont attachés entre eux par une articulation interphalangienne linéaire en flexion (29).

11. Main artificielle (30) selon la revendication 9 ou 10, **caractérisée en ce que** lesdites premières et secondes paires des segments du doigt artificiel forment un doigt longitudinal de la main artificielle (30) attaché à une structure de racine de doigts (26) à partir de laquelle, s'étendent une pluralité de doigts artificiels distinctes.

12. Main artificielle (30) selon la revendication 10, **caractérisée en ce que** l'allongement linéaire de l'articulation interphalangienne linéaire en flexion (29) entre le segment distal interne de la phalange (27) et le segment intermédiaire interne de la phalange (28) est mesurable à l'aide du déplacement linéaire d'un interrupteur photo interne (32) par rapport à un coupleur photo interne (33).

13. Main artificielle (30) selon la revendication 12, **caractérisée en ce qu'**une unité de contrôle électronique mesure simultanément le déplacement rotatif de ladite articulation interphalangienne distale en flexion et l'allongement linéaire de ladite articulation interphalangienne linéaire en flexion (29).
